Europäisches Patentamt

European Patent Office

Office européen des brevets

(19)

(11) Veröffentlichungsnummer: **0 101 815**
**A1**

(12) # EUROPÄISCHE PATENTANMELDUNG

(21) Anmeldenummer: **83106134.6**

(22) Anmeldetag: **23.06.83**

(51) Int. Cl.³: **G 01 F 1/38**
**G 01 F 1/36**

(30) Priorität: **28.06.82 DE 3224285**

(43) Veröffentlichungstag der Anmeldung:
**07.03.84 Patentblatt 84/10**

(84) Benannte Vertragsstaaten:
**FR GB IT NL**

(71) Anmelder: **Rafi GmbH & Co Elektrotechnische Spezialfabrik**
**Ravensburger Strasse 128-134**
**D-7981 Berg bei Ravensburg(DE)**

(72) Erfinder: **Köberle, Karl, Prof. Dr.-Ing.**
**Panoramastrasse 14**
**D-7980 Ravensburg 19(DE)**

(74) Vertreter: **Engelhardt, Guido, Dipl.-Ing.**
**Montafonstrasse 35 Postfach 1350**
**D-7990 Friedrichshafen 1(DE)**

(54) Durchflussmesssystem mit einem vom Differenzdruck eines Venturirohres beaufschlagten Messkörper.

(57) Bei einem Durchflußmeßsystem mit einem Venturirohr (1) und einem von dessen Differenzdruck beaufschlagten, beweglich gelagerten Meßkörper (3) wirkt der durch den Differenzdruck hervorgerufenen Auslenkkraft eine Gegenkraft entgegen und unabhängig von diesen Kräften wird der Meßkörper durch eine stellungsabhängige Rückstellkraft in der Nullstellung stabilisiert. Um auch kleine Durchflußmengen noch erfassen zu können und eine zu der Durchflußmenge proportionale Spannung zur Verfügung zu stellen, ist eine integrierend wirkende Regeleinrichtung (8), insbesondere PI-Regler, vorgesehen, die ein von der Größe und Dauer der Auslenkung des Meßkörpers (3) aus der Nullstellung abhängiges Ausgangssignal (u) erzeugt, wobei aus diesem mittels eines Quadrieres (9) und eines hysteresefreien Magnetsystems (3, 4) die Gegenkraft gewonnen wird. Der Meßkörper (3) kann ein frei beweglicher, permanent magnetischer Kolben sein, dem als Stellungsgeber eine Lichtschranke (5, 6) zugeordnet ist. Die Rückstellkraft kann im Zusammenhang mit dem Gewicht des Meßkörpers (3) mittels eines magnetischen Gleichfeldes oder im Zusammenhang mit dem Permanentmagnet mittels zweier einander entgegengesetzter Gleichfelder erzeugt werden.

FIG. 1

Die Erfindung betrifft ein Durchflußmeßsystem mit einem Venturirohr und einem von dessen Differenzdruck beaufschlagten beweglich gelagerten Meßkörper, wobei der durch den Differenzdruck hervorgerufenen Auslenkkraft eine Gegenkraft entgegenwirkt und der Meßkörper unabhängig von diesen Kräften durch eine stellungsabhängige Rückstellkraft in einer Nullstellung stabilisiert wird.

Ein Durchflußmeßsystem dieser Art ist aus der deutschen Auslegeschrift 11 10 892 bekannt. Als Meßkörper dient die Ankerplatte eines Elektromagneten. Sie ist mittels eines Balgens und einer Membran geführt, deren Rückstellkräfte sie in einer Nullstellung stabilisieren. Strömt die Flüssigkeit und wird die Ankerplatte dadurch aus ihrer Nullstellung ausgelenkt, so schaltet ein Kontakt den Elektromagneten ein. Die sich dadurch ausbildende magnetische Zugkraft öffnet den Kontakt immer wieder in rascher Folge, wobei der mit Hilfe von Glättungsgliedern sich einstellende mittlere Strom im Elektromagneten die vibrierende Ankerplatte an der Schaltgrenze des Kontakts gegen die Auslenkkraft im Gleichgewicht hält. In einen Meßluftspalt des Elektromagneten ist ein Kernresonanzmagnetfeldmesser eingebaut, der eine zur Feldstärke proportionale Meßfrequenz abgibt. Da die Feldstärke zur Wurzel aus der Magnetkraft proportional ist, bildet die erwähnte Frequenz eine zur Durchflußgeschwindigkeit proportionale Ausgangsgröße.

Wegen der Zuhilfenahme einer Magnetfeldmeßeinrichtung ist dieses bekannte Durchflußmeßsystem jedoch sehr kompliziert und aufwendig. Die durch die Zweipunktregelung bedingte ständige Schwingbewegung des Meßkörpers beeinträchtigt die Genauigkeit der Messung. Auch die Anzeige des in Form einer Frequenz anfallenden Ausgangssignals erfordert in vielen Anwendungsfällen einen hohen Aufwand.

Der Erfindung liegt die Aufgabe zugrunde, ein einfaches und genaues Durchflußmeßsystem vorzuschlagen, mit dem auch kleine Durchflußmengen noch erfaßt werden können und das eine zu der Durchflußmenge proportionale Spannung liefert, die unmittelbar angezeigt oder zur Optimierung eines Prozesses verwendet werden kann.

Diese Aufgabe wird ausgehend von einem Durchflußmeßsystem der einleitend bezeichneten Art erfindungsgemäß dadurch gelöst, daß eine integrierend wirkende Regeleinrichtung vorgesehen ist, die ein von der Größe und Dauer der Auslenkung des Meßkörpers aus der Nullstellung abhängiges Ausgangssignal erzeugt, und daß aus diesem mittels eines Quadrierers und eines hysteresefreien Magnetsystems die Gegenkraft gewonnen wird. Bei einer anfänglichen Auslenkung des Meßkörpers infolge des Differenzdrucks wächst das Ausgangssignal an und dementsprechend auch die aus diesem gewonnene Gegenkraft. Diese treibt den Meßkörper wieder in die Nullstellung zurück, wobei das Ausgangssignal und die Gegenkraft ihre erreichten Werte beibehalten. Der Meßkörper vibriert also nicht, sondern kommt aufgrund der Regelung immer wieder in seiner Nullstellung zur Ruhe, sobald die Durchflußmenge sich nicht mehr ändert. Das Ausgangssignal ist vorzugsweise eine Gleichspannung, die in dem Maße zur Durchflußgeschwindigkeit genau proportional ist, als die Gegenkraft von der Ausgangsspannung genau quadratisch abhängt. Letzteres ist jedoch mit Hilfe an sich bekannter Quadriernetzwerke ohne weiteres zu erreichen. Hystereseeinflüsse sind dadurch ausgeschaltet, daß ein eisenfreies Magnetsystem nach dem Prinzip eines Drehspulmeßwerks verwendet wird. Bei Nullstellung des Meßkörpers ist die magnetische Kraft zum Erregerstrom genau proportional.

Erfahrungsgemäß ist es schwierig, einen Meßkörper mit Hilfe von Federelementen in einer genau definierten Nullstellung zu halten. Es machen sich stets Temperatur- und Alterseinflüsse bemerkbar und Stoßbeanspruchungen sind möglichst fernzuhalten. Es wird deshalb vorgeschlagen, daß der Meßkörper als freibeweglicher Kolben ausgebildet ist. Aus der deutschen Offenlegungsschrift 27 51 103 ist zwar auch schon ein freibeweglicher Kolben bei einem Kraftstoffverbrauchsmesser für Verbrennungskraftmaschinen bekannt. Dieser hat jedoch keine definierte Nullstellung und kommt beim Betrieb des Verbrauchsmessers nicht zur Ruhe.

Das erwähnte hysteresefreie Magnetsystem kann dadurch verwirklicht werden, daß der Meßkörper mit einem Permanentmagneten versehen ist, welcher sich im Magnetfeld wenigstens einer fest angeordneten Spule bewegt. Dieses Magnetsystem wird zugleich zur Rückstellung des Meßkörpers in seine Nullstellung herangezogen bzw. zur genauen Festlegung dieser Nullstellung. Es kommen zwei Ausführungsformen in Betracht.

Bei der ersten Ausführungsform wirken auf den Meßkörper einerseits sein Gewicht abzüglich des Gewichts der von ihm verdrängten Flüssigkeit und andererseits die Kraft, die sich aus der Wechselwirkung zwischen dem Permanentmagneten und einem konstanten Erregerstrom der Spule ergibt. Die zuletzt erwähnte Kraft ist stellungsabhängig. Sie wächst bei zunehmender Annäherung des Permamentmagneten an die Spule zunächst an, um nach einem Maximum wieder abzunehmen, wenn der Permanentmagnet in die Spule eintritt. Man trifft nun die Anordnung so, daß der Meßkörper sich vertikal bewegen kann und nach oben in die Spule hineingezogen wird. Die stabile Nullstellung ist dort, wo die nach oben abnehmende und nach unten ansteigende Magnetkraft der konstanten Schwerkraft das Gleichgewicht hält.

Diese Anordnung eignet sich insbesondere bei der Anwendung als Kraftstoffverbrauchsmesser in Fahrzeugen.

Die dort vorkommenden, stoßartig verlaufenden Vertikalbeschleunigungen, die somit das Gleichgewicht stören, sind nur von kurzer Dauer; ihr Einfluß ist von höherer Frequenz und kann gegebenenfalls mittels einer als Tiefpaß wirkenden Schaltanordnung unterdrückt werden. Vorteilhafterweise beeinflussen jedoch Horizontalbeschleunigungen den Meßvorgang nicht.

Die andere Ausführungsform ergibt sich dadurch, daß man das Gewicht des mit dem Permanentmagneten versehenen Meßkörpers gleich dem Gewicht der verdrängten Flüssigkeit wählt und die Rückstellkraft im Zusammenwirken mit dem Permanentmagneten und zwei einander entgegenwirkenden, von konstanten Gleichströmen durchflossenen Spulen erzeugt. Zu einer derartigen Bemessung des Gewichts des Meßkörpers können entsprechend leichte Werkstoffe verwendet oder der Meßkörper kann als Hohlkörper ausgeführt werden. An die Stelle der Schwerkraft als Komponente der Rückstellkraft tritt hier die elektromagnetische Kraft der zweiten, entgegenwirkenden Spule. Die Nullstellung befindet sich dort, wo beide magnetischen Kräfte sich aufheben. Obwohl diese Ausführungsform des Durchflußmeßsystems auf Flüssigkeiten mit vorgeschriebener Dichte beschränkt ist, weist sie beachtliche Vorteile auf. Der Einfluß der Schwerkraft ist ausgeschaltet. Die Anordnung kann in jeder Lage eingebaut werden. Die Messung ist vollkommen beschleunigungsunabhängig. Es kommen deshalb auch Anwendungen im schwerelosen Raum in Betracht.

Als Stellungsgeber, welcher der Regeleinrichtung ihre Eingangsgröße liefert, wird zweckmäßigerweise eine Lichtschranke vorgesehen, deren Lichtstrom den Bewegungsweg des Meßkörpers kreuzt. Dabei muß der von der Flüssigkeit erfüllte Raum, in welchem sich der Meßkörper bewegt, lichtdurchlässige Fenster aufweisen oder insgesamt als Gefäß aus einem lichtdurchlässigen Werkstoff ausgebildet sein. Insbesondere eignen sich preiswerte Lichtschrankenbausteine mit Leuchtdioden, wobei auch eine Einstellmöglichkeit vorgesehen sein muß, um die Ausgangspannung des Lichtschrankenbausteins bei Nullstellung des Meßkörpers genau auf Null justieren zu können.

Als Regeleinrichtung eignet sich ein üblicher Operationsverstärker, der vorzugsweise als PI-Regler ausgebildet sein sollte. Falls die Flüssigkeitsdämpfung nicht ausreicht, die der Meßkörper in der ihn umgebenden Flüssigkeit erfährt, kann die Regeleinrichtung zusätzlich mit einem Differenzieranteil versehen werden. Beispielsweise könnte bei Durchflußmeßsystemen für Gase die Dämpfung nicht ausreichen.

Als der Regeleinrichtung nachgeschalteter Quadrierer verwendet man zweckmäßigerweise ein Diodennetzwerk,
wobei der vom Ausgangsignal der Regeleinrichtung
quadratisch abhängige Ausgangsstrom des Quadrierers
eine mit dem Permanentmagneten des Meßkörpers zusammenwirkende Spule speist. Dies kann die schon erwähnte,
für die Rückstellung verwendete Spule sein, so daß
deren Erregerstrom sich aus einem konstanten Gleichstromanteil und aus einem entgegenfließenden, vom
Ausgangssignal des Reglers abhängigen Gleichstromanteil zusammensetzt. Außerdem ist eine schaltungstechnische Zusammenfassung des Quadrierers und der Stromquelle für den konstanten Rückstellstrom in einem gemeinsamen Funktionsbaustein möglich.

Zwei Ausführungsbeispiele der Erfindung werden nachfolgend anhand der Zeichnung erläutert. Im einzelnen
zeigt

Fig.  1    eine schematische Gesamtdarstellung eines Durchflußmeßsystems,

Fig.  2    ein Schaltbild des elektronischen Teils des Meßsystem nach Fig. 1,

Fig.  3    eine Kurvendarstellung der Beziehung zwischen der Ausgangsspannung und dem Erregerstrom der Spule nach Fig. 1,

Fig.  4    eine schematische Kurvendarstellung der bei der Nullagenstabilisierung des Meßkörpers nach Fig. 1 beteiligten Kräfte und

Fig.  5    als weiteres Ausführungsbeispiel eine entsprechende Kurvendarstellung der beteiligten Kräfte bei der Nullagenstabilisierung eines Meßkörpers mit-

Hilfe von zwei Spulen.

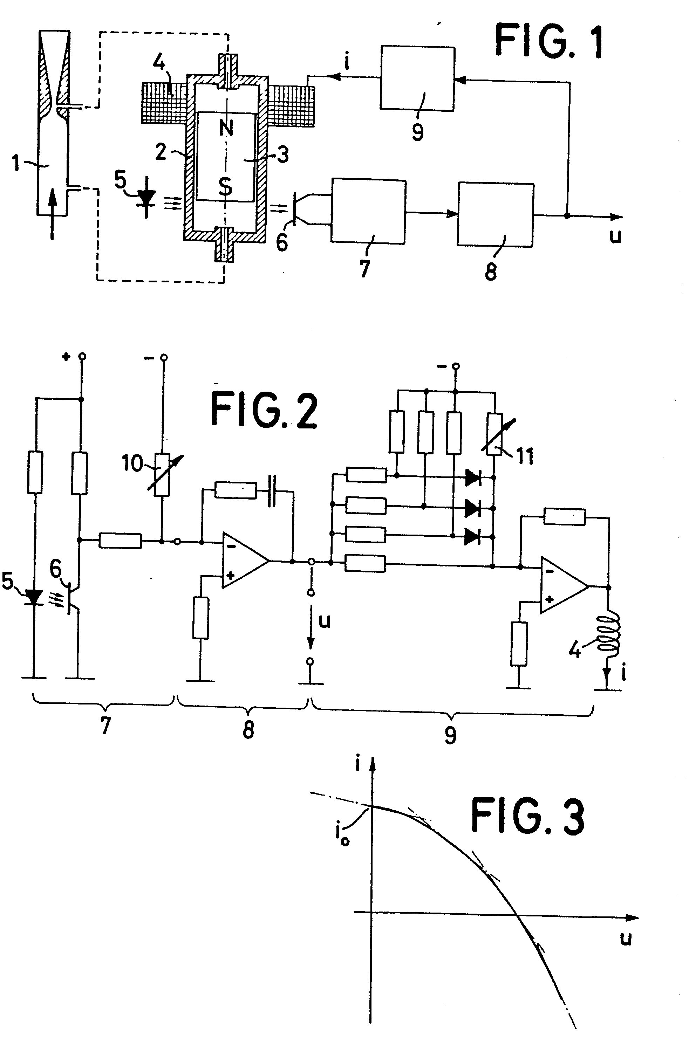

Das Durchflußmeßsystem nach Fig. 1 besteht aus einem
Venturirohr 1, das in Pfeilrichtung von einer Flüssigkeit durchströmt wird. Ein aus einem durchsichtigen Werkstoff gefertigter Hohlzylinder 2 ist stirnseitig mit den Bohrungen des Venturirohrs 1 verbunden.
In dem Hohlzylinder 2 ist ein permanentmagnetischer Kolben 3 in Achsrichtung frei beweglich angeordnet. Sein Magnetfeld ist mit einer fest angeordneten, den Hohlzylinder 2 umgebenden Spule 4 verkettet. Ebenfalls fest mit dem Hohlzylinder 2 verbunden ist eine Leuchtdiode 5 und ein Fototransistor 6, die eine Lichtschranke bilden, deren Strahlengang durch die untere Kante des Kolbens 3 teilweise abgedeckt wird. Der Fototransistor 6 ist Bestandteil einer Schaltung 7 aus Widerständen, die das Eingangssignal für einen PI-Regler 8 liefert. Die Ausgangsspannung u des PI-Reglers 8 wird auf einen Quadrierer 9 gegeben, dessen Ausgangsstrom i die Spule 4 speist. Die erwähnte Spannung u bildet das Ausgangssignal des Meßsystems. Sie ist proportional zur Durchflußgeschwindigkeit und kann an einem analog arbeitenden Anzeigegerät abgelesen oder auch weiterverarbeitet werden, z. B. zur Optimierung des Betriebszustandes eines Motors.

Die Schaltanordnung nach Fig. 2 wird mit einer positiven und einer negativen Gleichspannung gespeist und gliedert sich in die drei in Fig. 1 gezeigten Schaltungskomponenten, was durch gleiche Bezugszeichen angedeutet ist. Die Schaltung 7 liefert eine von der Stellung des Kolbens 3 abhängige Ausgangsspannung, die an einem Potentiometer 10 eingestellt werden kann. Insbesondere läßt sich die Einstellung so vornehmen, daß diese Ausgangsspannung Null ist, wenn der Kolben 3 bei nicht strömender Flüssigkeit sich in seiner Ruhelage befindet. Als PI-Regler 8 ist ein üblicher Operationsverstärker verwendet. Der Quadrierer 9 ist ein nicht linearer Funktionsbaustein in Form eines Diodennetzwerks. Er enthält ebenfalls einen Operationsverstärker und ein Potentiometer 11, an welchem ein konstanter Teilstrom $i_0$ des Ausgangsstroms i eingestellt werden kann.

Fig. 3 zeigt, daß im Falle u = 0 der Ausgangsstrom i gleich diesem Teilstrom $i_0$ ist. Der andere, negative Teilstrom hängt quadratisch von der Spannung u ab. Wenn somit u ansteigt, verringert sich der Gesamtstrom i und kehrt schließlich sogar seine Richtung um. Die Parabelform kann mit dem in Fig. 2 gezeigten Diodennetzwerk hinreichend gut angenähert werden. Die Ecken des strichpunktiert angedeuteten Polygonzuges sind in Wirklichkeit verschliffen, weil die Kennlinien der Dioden in Wahrheit keinen Knick haben.

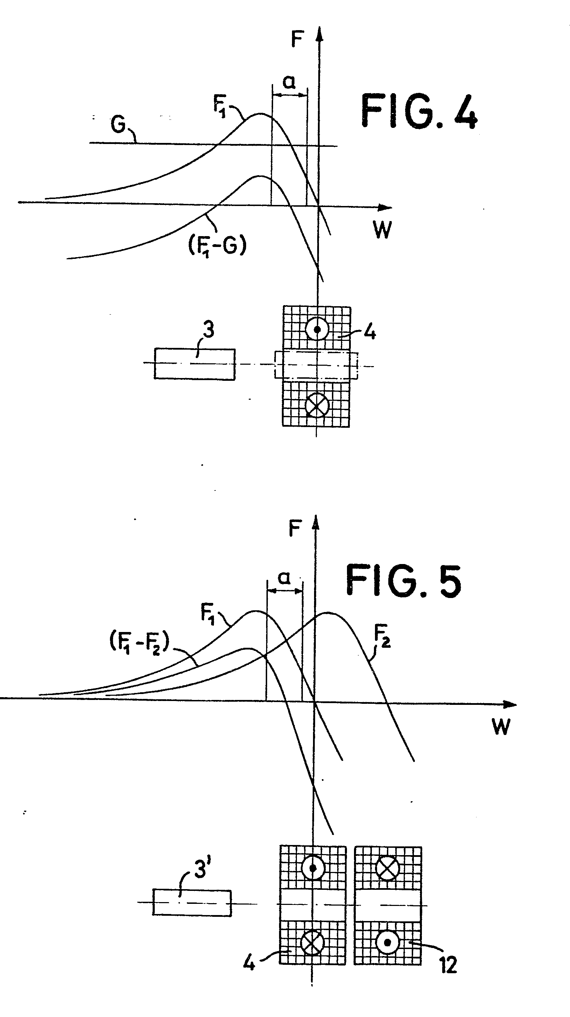

Grundsätzlich könnte der Kolben 3 auch durch Federelemente dazu veranlaßt werden, eine bestimmte Nullstellung oder Ausgangsstellung einzunehmen, wenn die Flüssigkeit nicht strömt und somit am Kolben 3 kein Differenzdruck wirkt. Anhand von Fig. 4 wird im folgenden eine andere Art der Nullagenstabilisierung vorgeschlagen, wobei vorausgesetzt ist, daß der Hohlzylinder 2 vertikal angeordnet ist und die Spule 4 sich, wie in Fig. 1 dargestellt, oben befindet. Die durch den Auftrieb verminderte Schwerkraft G zieht den Kolben 3 nach unten. Andererseits wird der magnetische Kolben von der Spule 4, die mit dem konstanten Teilstrom $i_0$ erregt ist, mit einer Kraft $F_1$ nach oben gezogen. Diese beiden Kräfte sind in Fig. 4 über dem Weg W des Kolbens 3 aufgetragen. Unterhalb des Koordinatenkreuzes sind die Spule 4 und der Kolben 3 noch einmal schematisch angedeutet, um die Bewegungs- bzw. Wirkungsrichtungen festzulegen. Die magnetische Kraft $F_1$ nimmt zunächst zu, wenn sich der Kolben der Spule nähert. Wenn bei dieser Bewegung der vordere Teil des Kolbens etwa in die Spule eintritt, erreicht die magnetische Kraft ihr Maximum, um danach wieder abzunehmen bis auf den Wert Null, wenn der Kolben die Spule symmetrisch durchdringt, wie strichpunktiert angedeutet. Die Schwerkraft G ist dagegen wegunabhängig. Die als dritte Kurve eingezeichnete Differenz beider Kräfte schneidet die Nullinie an zwei Stellen.

Die Anordnung ist nun so getroffen, daß der Bewegungsweg des Kolbens 3 auf einen Bereich a zu beiden Seiten des rechten stabilen Schnittpunkts der Differenzkraftkurve mit der Nullinie beschränkt ist. Das hat zur Folge, daß der Kolben sich genau in die Höhenlage einstellt, in der sich die auf ihn wirkenden Kräfte aufheben. Dies ist seine Nullstellung. Wird er nach oben oder unten ausgelenkt, so zieht ihn die nach unten bzw. oben wirkende Differenzkraft wieder in die Nullstellung zurück.

Unter dieser Voraussetzung wirkt das beschriebene Durchflußmeßsystem wie folgt. Solange die Flüssigkeit noch nicht strömt, nimmt der Kolben 3 eine Nullstellung ein, die durch den zufällig sich ausbildenden Gesamt-Erregerstrom i mitbestimmt ist. Mit Hilfe des Potentiometers 10 wird zunächst die Nullstellung in die günstigste Position innerhalb des Arbeitsbereichs der Lichtschranke gebracht.Sodann wird durch Justierung am Widerstand 11 die Ausgangsspannung u zu Null gemacht. In der Spule 4 fließt jetzt der Erregerstrom $i = i_o$. Sobald die Flüssigkeit strömt wird der Kolben 3 infolge der unterschiedlichen Drücke an seinen Stirnseiten angehoben. Er gibt etwas mehr Licht frei und das Ausgangssignal der Schaltung 7 wird negativ. Die Ausgangsspannung u verändert sich in positiver Richtung und der Erregerstrom i und mit ihm die magnetische Kraft $F_1$ werden kleiner. Der Vorgang ist abgeschlossen, wenn der Kolben 3 in seine Ausgangslage wieder zurückgekehrt ist und das Ausgangssignal der Schaltung 7 auch wieder Null ist. Die Spannung u hat während des Vorganges einen Wert ungleich Null angenommen, den sie jetzt beibehält, da sie ja den Strom i auf einem kleineren Wert halten muß.

Fig. 5 zeigt die Nullagenstabilisierung bei einer anderen Ausführungsform mit zwei Spulen 4 und 12 und einem Kolben 3', der mitsamt seinem Permanentmagneten gerade so schwer ist, daß Gewicht und Auftrieb sich aufheben. An die Stelle des Gewichts tritt hier die magnetische Kraft $F_2$ der koaxial angeordneten zweiten Spule 12, die ebenfalls von einem konstanten Gleichstrom aus einer besonderen Quelle gespeist wird. Die Spule ist jedoch entgegengesetzt gepolt. Als dritte Kurve ist auch in dieser Darstellung die Differenzkraft $F_1 - F_2$ eingezeichnet. Auch hier wird der Bewegungsbereich a des Kolbens 3' so gelegt, daß er den stabilen Schnittpunkt dieser Kurve mit der Nullinie etwa mittig einschließt. Einer der beiden konstanten Erregerströme der beiden Spulen kann vorgegeben werden; dieser Freiheitsgrad gibt der Anordnung eine größere konstruktive Flexibilität.

In einer Versuchsanordnung nach dem zuerst beschriebenen Ausführungsbeispiel wurden Durchflußmengenmessungen mit Wasser durchgeführt. Der große und kleine Durchmesser des Venturirohres betrug 8,5 bzw. 1,4 mm. Der Durchmesser des magnetischen Kolbens betrug 5 mm. Mit diesen Abmessungen konnten kleine Durchflußmengen in der Größenordnung von 1 Liter je Stunde noch zufriedenstellend gemessen werden. Eine weitere Verengung der kleinen Durchflußöffnung des Venturirohres und/oder Vergrößerung des Kolbendurchmessers läßt eine weitere Senkung

0101815

der unteren Grenze der noch meßbaren Durchflußmengen
erwarten.

0101815

Anmelder:  Rafi GmbH & Co
Elektrotechnische Spezialfabrik
Ravensburger Strasse 128-134
D 7981 Berg bei Ravensburg

Amtl. Bezeichnung:  "Durchflußmeßsystem mit einem
vom Differenzdruck eines Venturirohrs beaufschlagten Meßkörper"

A n s p r ü c h e

1.    Durchflußmeßsystem mit einem Venturirohr und
einem von dessen Differenzdruck beaufschlagten, beweglich gelagerten Meßkörper, wobei der durch den Differenzdruck hervorgerufenen Auslenkkraft eine Gegenkraft entgegenwirkt und der Meßkörper unabhängig von diesen
Kräften durch eine stellungsabhängige Rückstellkraft
in einer Nullstellung stabilisiert wird, dadurch gekennzeichnet, daß eine integrierend wirkende Regeleinrichtung (8) vorgesehen ist, die ein von der Größe und
Dauer der Auslenkung des Meßkörpers (3)  aus der Nullstellung abhängiges Ausgangssignal (u) erzeugt, und daß
aus diesem mittels eines Quadrierers (9) und eines
hysteresefreien Magnetsystems (3, 4) die Gegenkraft
gewonnen wird.

2.      Durchflußmeßsystem nach Anspruch 1, dadurch gekennzeichnet, daß der Meßkörper (3) als frei beweglicher Kolben ausgebildet ist.


3.      Durchflußmeßsystem nach Anspruch 1, dadurch gekennzeichnet, daß der Meßkörper (3) mit einem Permanentmagneten versehen ist, welcher sich im Magnetfeld wenigstens einer fest angeordneten Spule (4) bewegt.


4. Durchflußmeßsystem nach Anspruch 3, dadurch gekennzeichnet, daß das Gewicht (G) des Meßkörpers abzüglich des Gewichts der von ihm verdrängten Flüssigkeit einerseits und die sich aus der Wechselwirkung zwischen seinem Permanentmagneten und einer von einem konstanten

Gleichstrom ($i_0$) durchflossenen Spule (4) ergebende Kraft

($F_1$) andererseits zusammen die Rückstellkraft bilden.


5.      Durchflußmeßsystem nach Anspruch 3, dadurch gekennzeichnet, daß das Gewicht des mit dem Permanentmagneten versehenen Meßkörpers (3') gleich dem Gewicht der von ihm verdrängten Flüssigkeit ist und daß die Rückstellkraft im Zusammenwirken mit dem Permanentmagneten von zwei einander entgegenwirkenden, von konstanten Gleichströmen durchflossenen Spulen (4, 12) erzeugt wird.

6.      Durchflußmeßsystem nach Anspruch 1, dadurch gekennzeichnet, daß der Regeleinrichtung als Stellungsgeber eine Lichtschranke (5, 6) zugeordnet ist, deren Lichtstrom den Bewegungsweg des Meßkörpers (3) kreuzt.

7.      Durchflußmeßsystem nach Anspruch 1, dadurch gekennzeichnet, daß die Regeleinrichtung ein PI-Regler (8) ist.

8.      Durchflußmeßsystem nach einem der vorhergehenden Ansprüche, dadurch gekennzeichnet, daß der Regeleinrichtung ein als Diodennetzwerk ausgebildeter Quadrierer (9) nachgeschaltet ist, dessen Ausgangsstrom eine mit dem Permanentmagneten zusammenwirkende Spule (4) speist.

9.      Durchflußmeßsystem nach Anspruch 3, dadurch gekennzeichnet, daß ein von dem Ausgangssignal (u) der Regeleinrichtung (8) quadratisch abhängiger Strom und ein konstanter Gleichstrom ($i_0$) gemeinsam den Erregerstrom (i) der Spule (4) bilden.

# FIG. 1

*i*

*u*

# FIG.2

*u*

10    11

5    6

7    8    9

# FIG. 3

*i*

*i*₀

*u*

0101815

FIG. 4

FIG. 5

0101815

**Europäisches Patentamt**

## EUROPÄISCHER RECHERCHENBERICHT

Nummer der Anmeldung

| | EINSCHLÄGIGE DOKUMENTE | | EP 83106134.6 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) | |
| X,Y | US - A - 3 878 717 (SILVA) <br> * Spalte 1, Zeile 39 - Spalte 2, Zeile 66 * | 1,2 | G 01 F 1/38 <br> G 01 F 1/36 | |
| A | | 3,4,8 | | |
| | -- | | | |
| Y,D | DE - A1 - 2 751 103 (BLIESENER) <br> * Fig.; Seite 11, Zeile 4 - Seite 14, Zeile 4 * | 2 | | |
| | -- | | | |
| A | DE - A1 - 2 442 155 (LICENTIA) <br> * Fig. 1,3,4; Seite 3, Zeile 2 - Seite 4, Zeile 34 * | | | |
| | -- | | | |
| A,D | DE - C - 1 110 892 (LICENTIA) <br> * Fig. 1,2 * | | RECHERCHIERTE SACHGEBIETE (Int. Cl. ³) | |
| | ---- | | G 01 F 1/00 | |

Der vorliegende Recherchenbericht wurde für alle Patentansprüche erstellt.

| Recherchenort | Abschlußdatum der Recherche | Prüfer |
|---|---|---|
| WIEN | 01-12-1983 | GRONAU |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82